# EUROPÄISCHE PATENTANMELDUNG

(11) **EP 2 952 558 A1**
(43) Veröffentlichungstag der Anmeldung: **09.12.2015**
(21) Anmeldenummer: 14170732.3
(22) Anmeldetag: 02.06.2014
(51) Int. Cl.: C10L 9/08, C10L 5/44, F23G 7/10

(54) **Verfahren und Vorrichtung zur Pflanzenkohleherstellung**

(71) Anmelder: Aigner Josef Peter, 6383 Erpfendorf (AT)
(72) Erfinder: Aigner Josef Peter, 6383 Erpfendorf (AT)
(74) Vertreter: König Szynka Tilmann von Renesse Patentanwälte Partnerschaft mbB

(57) **Zusammenfassung**

Die Erfindung betrifft ein Verfahren und eine Vorrichtung zur Herstellung von Pflanzenkohle 6 und Gewinnung von Wärme durch Verkohlen von Biomassebrennstoff 1 und Verbrennen der flüchtigen Stoffe unter Einsatz einer motorischen Brennstofffördereinrichtung 2.

## Beschreibung

Die vorliegende Erfindung bezieht sich auf die Herstellung von Pflanzenkohle aus Biomasse.

Pflanzenkohle, konkret Holzkohle, ist als Brennstoff seit langer Zeit bekannt, findet aber heute nur noch in speziellen Bereichen Anwendung, beispielsweise beim Grillen oder beim "Räuchern" in dem Sinn der Verbrennung von Substanzen zur Dufterzeugung, zum Beispiel von Weihrauch. Traditionell wird Holzkohle aus geschlagenem Holz in Meilern hergestellt, wobei im Wesentlichen für einen massiven Sauerstoffmangel gesorgt und damit eine vollständige Verbrennung verhindert wird. Diese Holzkohleherstellung ist in hohem Maß umweltschädlich, weil nennenswerte Energiemengen ungenutzt bleiben und in relativ großer Menge schädliche Abgase entstehen.

Pflanzenkohle ist ferner auch bereits seit Langem zur Bodenverbesserung eingesetzt worden. Hier spielen die Absorptionsfähigkeiten für Wasser und Nährstoffe und der Kohlenstoffgehalt, der dem Humusaufbau zugutekommt, eine wesentliche Rolle.

Der Erfindung liegt die Aufgabe zugrunde, ein verbessertes Verfahren und eine entsprechend angepasste Vorrichtung anzugeben, mit denen in vorteilhafter Weise Pflanzenkohle hergestellt werden kann.

Die Aufgabe wird gelöst durch ein Verfahren zur Herstellung von Pflanzenkohle und Gewinnung von Wärme, bei welchem Verfahren Biomassebrennstoff mit einer motorischen Brennstofffördereinrichtung in einen Brenner gefördert wird, der in den Brenner geförderte Biomassebrennstoff in dem Brenner zu Pflanzenkohle verkohlt wird, wobei die frei werdenden flüchtigen Stoffe zur Wärmegewinnung in dem Brenner verbrannt werden, und in dem Brenner erzeugte Pflanzenkohle mit einer Pflanzenkohlefördereinrichtung aus dem Brenner abgeführt wird, sowie eine entsprechend ausgelegte Vorrichtung.

Die Erfindung betrifft ferner auch die abhängigen Ansprüche, die vorteilhafte Ausgestaltungen wiedergeben und deren Inhalt sich grundsätzlich auf alle Anspruchskategorien bezieht.

Erfindungsgemäß wird zur Erzeugung von Pflanzenkohle ein Brenner eingesetzt. In diesem werden die bei der Verkohlung von Biomasse als Brennstoff anfallenden flüchtigen Stoffe verbrannt, um gleichzeitig Wärme zu gewinnen. Hiermit kann Energie gewonnen und die Abgasbilanz im Vergleich zu Meilern deutlich verbessert werden. Außerdem ist der Brenner einfacher zu bedienen, im Regelfall kompakter und eignet sich besser für eine dauerhafte Prozess- und Qualitätskontrolle.

Der Brenner wird versorgt durch eine Brennstofffördereinrichtung, die die Biomasse in den Brenner fördert. Die durch die Verkohlung erzeugte Pflanzenkohle wird durch eine weitere Fördereinrichtung aus dem Brenner herausgebracht und kann die Holzkohle beispielsweise in ein Lagergefäß oder einen Lagerraum überführen.

Die erzeugte Pflanzenkohle kann noch weiterverarbeitet werden, zum Beispiel zerkleinert werden, und insbesondere zur Bodenverbesserung eingesetzt werden. Das Verbringen der Pflanzenkohle in den Boden bindet einen großen Teil des Kohlenstoffs des eingesetzten Biomassebrennstoffs über lange Zeit im Boden und ist damit aus heutiger Sicht betrachtet auch von großem Interesse für den Klimaschutz. Daneben können deutliche Vorteile für den Gartenbau oder die Landwirtschaft erreicht werden, auf die hier nicht im Detail eingegangen wird.

Der Biomassebrennstoff ist vorzugsweise "partikelförmig", wobei diese Aussage auch mit der Größe des Brenners zusammenhängt. Durch eine entsprechende (nicht zu große) Partikelgröße kann erreicht werden, dass sich der Brennstoff im Brenner nicht nur gut verteilt und handhaben lässt, sondern vor allem gleichmäßig und ausreichend schnell umgesetzt wird. Bevorzugt kommen Hackschnitzel in Betracht, andere partikelförmige Biomassestoffe wie zum Beispiel Pellets sind auch geeignet, wobei Pellets im Besonderen für die vorliegende Anwendung aus ökonomischen Gründen weniger in Betracht kommen. Der Begriff der Hackschnitzel umfasst dabei auch Hackschnitzel zum Beispiel aus Stroh und anderen Biomasseformen, Holzhackschnitzel sind allerdings von besonderem Interesse.

Die erfindungsgemäß vorgesehene motorische Ausführung der Brennstofffördereinrichtung kann bei partikelförmigen Brennstoffen besonders einfach gestaltet sein. Zum Beispiel sind beim Hackschnitzeltransport bereits entsprechende Schneckenförderer oder Schubstangenförderer bekannt und bewährt.

Auch die Pflanzenkohlefördereinrichtung kann motorisch betrieben werden. Hier sind aber auch geschickte Konstruktionen ohne Motorantrieb denkbar, bei denen beispielsweise die Schwerkraft ausgenutzt wird und die Holzkohle in irgendeiner Form aus dem Brenner herausfällt oder -rutscht.

Der Einsatz einer motorischen Brennstofffördereinrichtung erlaubt nicht nur eine einfachere Bedienung, sondern eignet sich besonders gut für kontinuierliche Verfahren. Bei diesen wird also der Brennstoff (zumindest auch) während des Brennerbetriebs eingebracht und die Pflanzenkohle während des Brennerbetriebs abgeführt, so dass das Verfahren also über die Umsetzung einer Erstbeschickung hinaus fortgeführt werden kann. Vorzugsweise sind die Fördereinrichtungen auf eine kontinuierliche Beschickung bzw. Abführung ausgerichtet, was die Umsetzung in dem Brenner vergleichmäßigt und die Einhaltung der gewünschten Prozessbedingungen vereinfacht.

Die Förderrate insbesondere des Brennstoffs kann eine besondere Bedeutung für eine geeignete Prozessführung haben. Im Unterschied zum Vorgehen zum Beispiel bei Meilern kann vor allem durch eine relativ hohe Brennstoffförderrate dafür gesorgt werden, dass keine vollständige Verbrennung des Brennstoffs, sondern nur eine Verkohlung zur Pflanzenkohle stattfindet. Um hier Orientierungswerte anzugeben, wird auf typische Brennwerte von zum Beispiel Brennholz abgestellt. Bei absolut trockenem Holz liegen diese bei etwa 5 bis 5,2 kWh/kg, was eher als Maximalwert als als realistische Bezugsgröße zu betrachten ist. Bei Holzpellets, die ebenfalls sehr trocken sind, wird größenordnungsmäßig ein Wert von 4,9 kWh/kg erreicht. Bei gewöhnlichem Brennholz sind Werte in der Größenordnung von 4 kWh/kg zu erwarten. Dies setzt eine vollständige Verbrennung zu Asche voraus. Bei einer Verkohlung zu Pflanzenkohle und Verbrennung lediglich der leichtflüchtigen Bestandteile reduziert sich der Brennwert (ohne Berücksichtigung des Brennwerts der Pflanzenkohle) um einen Faktor von ungefähr 2 bis 3. Bei einer Prozessführung mit einem Förderratenwert von dementsprechend mindestens etwa 0,4 kg, vorzugsweise mindestens 0,5 oder sogar 0,6 kg, Biomassebrennstoff pro Stunde und pro kW Brennerleistung ergibt sich also eine Verkohlung und keine nennenswerte vollständige Verbrennung. Dabei muss natürlich für eine ausreichende und gleichmäßige Luftzufuhr gesorgt werden. Wichtig ist aber, dass bei dieser Erfindung vorzugsweise (in Bezug auf die Brennerleistung) vor allem mit einer deutlich erhöhten Brennstoffversorgung und weniger nur mit einer Sauerstoffverknappung für die Pflanzenkohleherstellung gesorgt werden soll.

Bei dieser Betrachtung wird der Einfachheit halber unterstellt, dass die verschiedenen Holzarten und auch andere typische Biomassetypen wie zum Beispiel Stroh bei einer für eine gute Verbrennung geeigneten Restfeuchte ähnliche Brennwerte pro Masseeinheit haben; in der Tat ist der Einfluss der Restfeuchte größer. Hier wird angenommen, dass die Restfeuchte bei höchstens 20% liegt.

Eine zusätzliche Kontrollmöglichkeit bietet die Temperatur in der Brennerzone, in der die eigentliche Verkohlung auftritt. Diese liegt erfindungsgemäß vorzugsweise bei höchstens 600°, besonders bevorzugterweise bei höchstens 580°, 570°, 560° oder sogar 550°. Dieser Wert bezieht sich allerdings nicht auf eine eventuelle Nachverbrennung der entweichenden flüchtigen Stoffe mit Sekundärluftzuführung. Hier könnten im Prinzip auch höhere Temperaturen auftreten, was nicht schadet, solange dadurch keine wesentliche Einwirkung auf die Verkohlung, das heißt eine Verbrennung der Biomasse zu Asche, entsteht. Grundsätzlich könnte durch Energieentzug auch die Temperatur im Brenner zur Sicherstellung einer geeigneten Prozesstemperatur herangezogen werden; bevorzugt ist allerdings eine entsprechende großzügige Einstellung der Brennstoffförderrate. Das ist einfacher und erlaubt einen hohen Durchsatz und einen relativ großen Heizleistungswert.

Die gewonnene Energie kann in verschiedener Weise genutzt werden, im einfachsten Fall, indem der Brenner als Ofen die Energie durch seine Wände zur Raumheizung oder zum Aufheizen eines angrenzenden technischen Prozesses oder auch eines Speichervolumens oder Wasservolumens zur Verfügung stellt. Vorzugsweise ist jedoch ein Fluidwärmetauscher vorgesehen, wobei mit dem Begriff des Wärmetauschers Strukturen gemeint sind, die auf eine vergrößerte Oberfläche abzielen; eine einfache Ofenwand wird also nicht als Wärmetauscher betrachtet. Ein solcher Wärmetauscher kann beispielsweise durch Konvektion oder mit Gebläse Luft erhitzen und etwa zur Raumheizung zur Verfügung stellen, der Brenner also als Konvektionsofen arbeiten. Bevorzugt ist aber ein Flüssigkeitswärmetauscher, insbesondere Wasserwärmetauscher, mit dem Heizwasser erwärmt wird. Dieses kann natürlich ebenfalls für einen technischen Prozess oder zum Erwärmen eines Puffers eingesetzt werden, bevorzugt kommt aber der Einsatz für die Gebäudeheizung in Betracht. Damit wird der Wärmetauscher in einem Heizkreislauf, also einem Wärmenetz, eingesetzt. In Betracht kommen hier auch Wärmenetze, die mehr als ein Gebäude versorgen, insbesondere auch sogenannte Fernwärmenetze.

Wie bereits kurz angedeutet, ist bei der Erfindung auch der Einsatz von Sekundärluft möglich, soweit dadurch im Wesentlichen nur die Verbrennung der flüchtigen Stoffe betroffen ist und verbessert wird. In solchen Fällen ist nur die direkt der Verkohlung zugeführte Luft (hier als Primärluft bezeichnet) für die Verkohlung relevant und die Sekundärluft kann dementsprechend großzügiger eingestellt werden.

Die erzeugte Wärme kann bei einer besonderen Ausgestaltung auch für die Pflanzenkohleherstellung selbst Verwendung finden, und zwar indem weiterer Biomassebrennstoff, also nicht der bisher betrachtete, mit der Abwärme der Verkohlung und/oder Sekundärverbrennung des bisher betrachteten Prozesses erhitzt wird. Dies kann in einem von einer Fördereinrichtung belieferten oder durchsetzten Gefäß im Bereich der Flammen oder jedenfalls des Abgasstroms geschehen. Der Brennstoff in dem Gefäß wird dabei bei geeigneter Temperatur umgesetzt zur Pflanzenkohle. Die wiederum entstehenden flüchtigen Stoffe können abgeführt, gesammelt, an anderer Stelle verbrannt oder, vorzugsweise, direkt in die Flammen oder den Abgasstrom geführt und dort verbrannt werden. Zum Beispiel kann das erwähnte Gefäß hierzu Löcher aufweisen.

Die Erfindung wird im Folgenden anhand zweier Ausführungsbeispiele näher erläutert, deren einzelne Merkmale im Rahmen des Inhalts der selbstständigen Ansprüche erfindungswesentlich sein können, und zwar auch in anderen Kombinationen. Ferner beziehen sich die Merkmale auf eine geeignete Vorrichtung, auf deren hier betrachtete Verwendung zur Pflanzenkohleherstellung und Wärmegewinnung und schließlich auf das Verfahren.
- Figur 1: zeigt eine schematische Gesamtansicht einer erfindungsgemäßen Vorrichtung einschließlich Brennstofflager und Pflanzenkohlelager;
- Figur 2: zeigt eine detailliertere schematische Ansicht eines Brenners der Vorrichtung aus Figur 1;
- Figur 3: zeigt als zweites Ausführungsbeispiel eine Variante des Brenners aus Figur 2;
- Figur 4: zeigt als drittes Ausführungsbeispiel eine weitere Variante des Brenners aus Fig. 2.

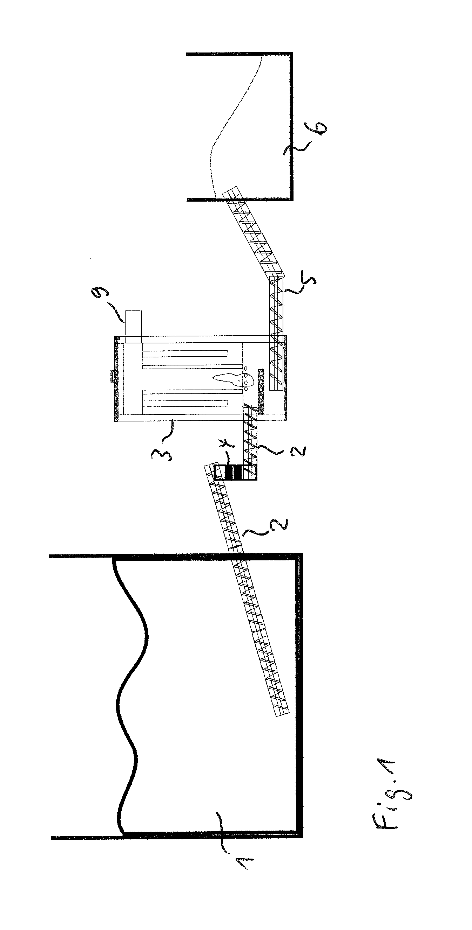

In Fig. 1 ist links ein Biomassespeicher 1 als Brennstoffvorratsbehälter eingezeichnet, beispielsweise ein Container mit Holzhackschnitzeln. Im unteren Bereich des Hackschnitzelcontainers 1 ist eine Brennstofffördereinrichtung 2 angeordnet, nämlich ein mehrstufiger Schneckenförderer, der zu einem Brenner 3 führt. Zwischen der dritten und vierten Stufe des Förderers 2 ist eine an sich bekannte Rückbrandsicherungsklappeneinrichtung 4 vorgesehen. Statt des Schneckenförderers 2 ist beispielsweise auch eine Schubstangenfördereinrichtung geeignet.

Die Fördereinrichtung 2 führt die Hackschnitzel dem Brenner 3 etwas oberhalb seines unteren Randes zu. Etwas weiter unten im Brenner 3 ist eine weitere Fördereinrichtung 5 vorgesehen, nämlich eine Pflanzenkohlefördereinrichtung, die ebenfalls als mehrstufiger Schneckenförderer ausgebildet ist und zu einem Pflanzenkohlelager 6 führt, beispielsweise einem weiteren Container. Nach Abtransport könnte z. B. die Verwertung der Pflanzenkohle zur Einarbeitung in den Boden von Feldern, Äckern oder Gärten folgen, und zwar unter Zugabe von Dünger. Bei dem Dünger kann es sich zum Beispiel um organische Abfälle handeln. Die Mischung wird gelegentlich auch als Terra preta bezeichnet.

In dem weiter unten noch näher beschriebenen Brenner 3 erfolgt eine Verkohlung der Holzhackschnitzel zu Pflanzenkohle bzw. Pyrolysekoks (sogenannte Biokohle). Die beiden Pfeile oberhalb des Brenners 3 symbolisieren die dabei entstehende Wärme, die zum Beispiel zur Warmwassererzeugung genutzt wird. Das Bezugszeichen 9 bezeichnet ein Abgasrohr des Brenners 3. Die Fördereinrichtung 5 transportiert das feinstückige Pyrolysekoks zu dem Container 6. Die Feinstückigkeit muss bei diesem Ausführungsbeispiel nicht gesondert gewährleistet werden, weil bei der Verkohlung bereits partikelförmiger Holzhackschnitzel selbsttätig feinstückiges Pyrolysekoks mit einer geeigneten Struktur zur weiteren Nutzung anfällt. Wenn die mit dem Pfeil 8 symbolisierten organischen Abfälle ebenfalls in feine Partikelform gebracht werden, kann die entsprechende Mischung unmittelbar eingesetzt werden.

Der Brenner 3 könnte übrigens ebenfalls in einem Container montiert sein, wobei wir zur Illustration auf ein früheres europäisches Patent EP 1 429 088 und ein früheres deutsches Patent 10 2004 007 705 verweisen, die sich auf die Containerintegration einer Biomasseheizung beziehen. Der Container für den Brenner 3 kann gleichzeitig zur Lagerung der Holzhackschnitzel und/oder der erzeugten Pflanzenkohle dienen, aber auch ein eigenständiger Container sein. Letztlich hängt das von dem gewünschten Speichervolumen und davon ab, ob die Hackschnitzel und/oder die Pflanzenkohle zum Beispiel durch Austausch des entsprechenden Containers 1 bzw. 6 heran- bzw. abtransportiert werden sollen.

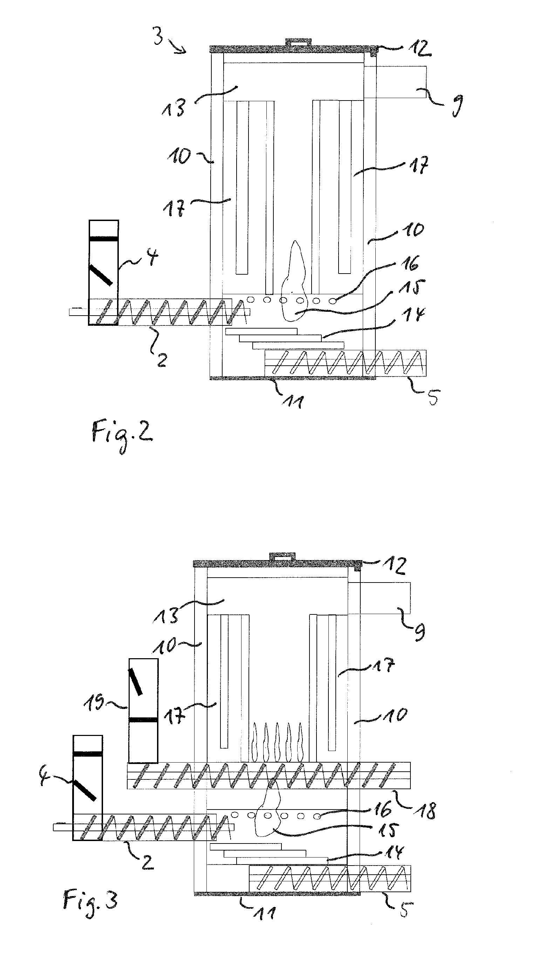

Fig. 2 zeigt einen Brenner 3 für die Vorrichtung aus Fig. 1 in weiteren Einzelheiten. Links ist die bereits beschriebene Fördereinrichtung 2 und rechts unten die ebenfalls bereits beschriebene Fördereinrichtung 3 eingezeichnet. Der Brenner 3 hat im Wesentlichen eine Kasten- oder Tonnenform mit isolierend ausgestalteten, zum Beispiel schamottierten Wänden 10. Im unteren Bereich existiert wegen der dort nicht sehr hohen Temperaturen ein einfacher Boden 11 und im oberen Bereich ein abnehmbarer Deckel 12. Unter dem Deckel 12 befindet sich ein Abgassammelrohr 13, das nach rechts zu dem Abgasrohr 9 führt und über dieses an einen Schornstein oder eine andere Entsorgung des Abgases angeschlossen ist.

Die von der Fördereinrichtung 2 herangeförderte Biomasse, hier also die Hackschnitzel, fällt auf einen an sich von Hackschnitzelheizungen bekannten Stufenrost 14 mit hier drei übereinanderliegenden Stufen, von denen die obere und die untere relativ zur mittleren ortsfesten Stufe beweglich sind. Durch diese Bewegungen werden die zunehmend verkohlenden Hackschnitzel weiter nach rechts und weiter nach unten transportiert, bis sie in den Bereich der Pflanzenkohlefördereinrichtung 3 fallen und abgeführt werden. Während der Verkohlung entstehen bekanntlich flüchtige brennbare Stoffe, die mit einer Flamme 15 symbolisiert sind. Diese Flamme richtet sich nach oben und bis in den Bereich von Sekundärluftöffnungen 16, die deutlich oberhalb des Stufenrosts 14 eingezeichnet sind. Im unteren Bereich gibt es auch eine Primärluftzufuhr, allerdings mit kleineren Luftdurchsatzraten, die nicht eingezeichnet ist.

Die Flamme schlägt bis in einen im Vergleich zu dem Grundriss des Brenners 3 deutlich schmaleren Schacht zwischen zwei Wärmetauscherschichten 17, die in an sich bekannter Weise von mäandrierend laufende Wasserströmungen durchsetzt und gekühlt sind. In dem Schacht dazwischen geben die verbrennenden bzw. verbrannten flüchtigen Stoffe einen großen Teil ihrer Wärmenergie ab und erreichen als abgekühltes Abgas das Abgassammelrohr 13 darüber.

Fig. 3 zeigt eine etwas komplexere Variante eines Brenners, wobei übereinstimmende Bezugszeichen entsprechende Elemente bezeichnen, auf deren erneute Erläuterung verzichtet wird. In diesem Fall ist im oberen Bereich der Flamme 15 eine weitere Fördereinrichtung 18 für Hackschnitzel aus demselben Hackschnitzelcontainer 1 vorgesehen. Hier ist lediglich die entsprechende Rückbrandsicherungsklappeneinrichtung 19 gezeichnet, der von dieser zu dem Container 1 führende Teil der Fördereinrichtung 18 ist weggelassen. Ebenfalls weggelassen ist ein an den rechten Rand der Fördereinrichtung 18 in Fig. 3 anschließender Teil derselben, der von dort zu dem Pflanzenkohlecontainer 6 führt. Die Hackschnitzel in der Fördereinrichtung 18 durchlaufen den heißesten Bereich des Brenners 3, so dass es während der Förderung der Hackschnitzel darin zu deren Verkohlung kommt. Die dabei freiwerdenden flüchtigen Stoffe treten aus Öffnungen im oberen Bereich des Mantelrohres des Förderers 18 aus, was durch die fünf eingezeichneten kleineren Flammen 20 symbolisiert ist. Diese Flammen tragen zusätzlich zur Heizleistung des Brenners 3 bei.

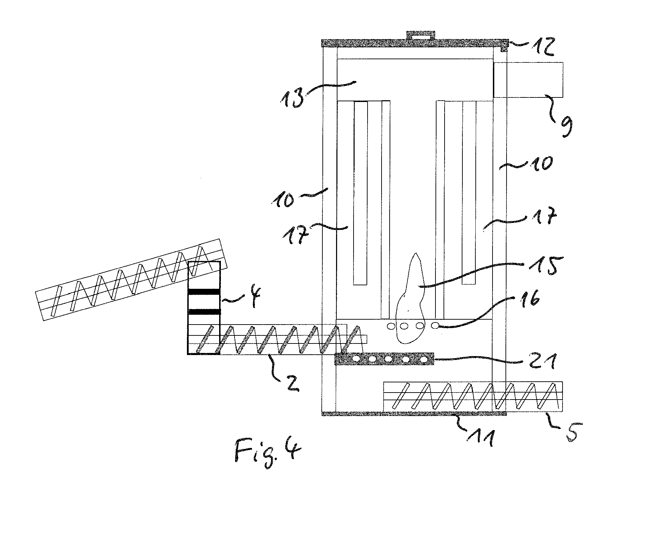

Fig. 4 zeigt eine gegenüber Fig. 2 vereinfachte Variante eines Brenners, wobei erneut übereinstimmende Bezugszeichen entsprechende Elemente bezeichnen und diese nicht mehr erläutert werden. Bei diesem dritten Ausführungsbeispiel ist anstelle des Stufenrosts 14 aus Fig. 2 und Fig. 3 ein einfacher feststehender Rost 21 im Einsatz. Dabei könnte es sich alternativ auch um eine Brennerschale 21 handeln. Diese Ausführungsform kommt v. a. für kleinere Anlagen in Betracht.

## Patentansprüche

1. Verfahren zur Herstellung von Pflanzenkohle (6) und Gewinnung von Wärme, bei welchem Verfahren
- Biomassebrennstoff (1) mit einer motorischen Brennstofffördereinrichtung (2) in einen Brenner (3) gefördert wird,
- der in den Brenner (3) geförderte Biomassebrennstoff (1) in dem Brenner (3) zu Pflanzenkohle (6) verkohlt wird, wobei die frei werdenden flüchtigen Stoffe zur Wärmegewinnung in dem Brenner (3) verbrannt werden,
- und in dem Brenner (3) erzeugte Pflanzenkohle (6) mit einer Pflanzenkohlefördereinrichtung (5) aus dem Brenner (3) abgeführt wird.

2. Verfahren nach Anspruch 1, das als kontinuierliches Verfahren ausgestaltet ist, wobei während des Betriebs des Brenners (3) der Biomassebrennstoff (1) in den Brenner (3) gefördert und die Pflanzenkohle (6) aus dem Brenner (3) abgeführt wird.

3. Verfahren nach Anspruch 1 oder 2, bei dem (bezogen auf einen brennfertigen trockenen Zustand) mindestens 0,4 kg Brennstoff (1) pro Stunde Brennerbetrieb und pro kW Brennerheizleistung in den Brenner (3) gefördert werden.

4. Verfahren nach einem der vorstehenden Ansprüche, bei dem die Temperatur bei dem Verkohlen des Biomassebrennstoffs (1) höchstens 600°C beträgt.

5. Verfahren nach einem der vorstehenden Ansprüche, bei dem der Biomassebrennstoff (1) aus Biomasse-Hackschnitzeln, insbesondere Holzhackschnitzeln, besteht.

6. Verfahren nach einem der vorstehenden Ansprüche, bei dem durch einen Fluidwärmetauscher (17), insbesondere einen Wasserwärmetauscher, in dem Brenner (3) erzeugte Wärme ausgekoppelt wird.

7. Verfahren nach einem der vorstehenden Ansprüche, bei dem zu dem Verbrennen der flüchtigen Stoffe Sekundärluft (16) zugeführt wird.

8. Verfahren nach einem der vorstehenden Ansprüche, bei dem mit einer dritten Fördereinrichtung (18) weiterer Biomassebrennstoff (1) in den Brenner (3) gefördert wird und dort in der Hitze der Verbrennung der flüchtigen Stoffe des Biomassebrennstoffs (1) aus der in Anspruch 1 genannten Brennstofffördereinrichtung (2), insbesondere in einem Gefäß im Abgasstrom oder der Flamme, verkohlt wird.

9. Verfahren nach Anspruch 8, bei dem die bei dem Verkohlen des von der dritten Fördereinrichtung (18) geförderten Biomassebrennstoffs (1) entstehenden flüchtigen Stoffe in dem Brenner (3) verbrannt werden, insbesondere durch Öffnungen in dem Gefäß in die Flamme oder den Abgasstrom geleitet und dort verbrannt (20) werden.

10. Verfahren nach einem der vorstehenden Ansprüche, bei dem die erzeugte Wärme für ein Heizungswärmenetz, insbesondere ein mehr als ein Gebäude erfassendes Wärmenetz, verwendet wird.

11. Vorrichtung zur Herstellung von Pflanzenkohle und Gewinnung von Wärme, mit
- einer motorischen Brennstofffördereinrichtung (2) zum Fördern von Biomassebrennstoff (1) in einen Brenner (3),
- dem Brenner (3) zum Verkohlen der geförderte Biomassebrennstoff (1) in dem Brenner (3) zu Pflanzenkohle (6) und Verbrennen der frei werdenden flüchtigen Stoffe zur Wärmegewinnung,
- und einer Pflanzenkohlefördereinrichtung (5) zum Abführen in dem Brenner (3) erzeugter Pflanzenkohle (6) aus dem Brenner (3),
welche Vorrichtung für ein Verfahren nach einem der Ansprüche 1 bis 10 ausgelegt ist.

12. Verwendung einer Vorrichtung nach Anspruch 11 entsprechend einem der Ansprüche 1 bis 10.
